# FASCICULE DE BREVET EUROPEEN

(11) **EP 3 938 675 B1**
(45) Date de publication et mention de la délivrance du brevet: **29.06.2022**
(21) Numéro de dépôt: 20725818.7
(22) Date de dépôt: 04.03.2020
(51) Int. Cl.: F16D 65/00, A47L 9/16

(54) **DISPOSITIF DE SÉPARATION ET UTILISATION DU DISPOSITIF POUR SÉPARER ET COLLECTER LES POUSSIÈRES DE FREINAGE**
SEPARATORANORDNUNG UND VERWENDUNG DER ANORDNUNG FÜR SEPARATION UND AUFSAMMLUNG VON BREMSSTAUB
SEPARATING DEVICE AND USE OF THE DEVICE FOR SEPARATING AND COLLECTING BRAKE DUST

(30) Priorité: 11.03.2019 FR 1902459
(43) Date de publication de la demande: 19.01.2022
(73) Titulaire: SOGEFI FILTRATION, 78280 Guyancourt (FR); Tallano Technologie, 92100 Boulogne Billancourt (FR)
(72) Inventeur: ARNAULT, Nicolas, 78140 VÉLIZY-VILLACOUBLAY (FR); RIVIERE, Lucie, 14310 COULVAIN (FR); PIGNOL, Stephan, 14320 CLINCHAMPS SUR ORNE (FR); COLLICARD, Florent, 35000 RENNES (FR)
(74) Mandataire: Plasseraud IP
(86) Numéro de dépôt international: PCT/FR2020/050428
(87) Numéro de publication internationale: WO 2020/183092

(56) Documents cités:
- DE-A1-102017 201 736
- DE-U1-202005 006 844
- GB-A- 2 508 539

## Description

### DOMAINE TECHNIQUE

La présente invention est relative aux dispositifs de séparation d'éléments polluants générés lors d'un freinage, typiquement par l'action de patins contre un disque rotor tournant autour d'un axe. Le domaine d'application de l'invention concerne en particulier la séparation de poussières et d'eau pour rendre un ensemble de frein non polluant lors du freinage d'un véhicule routier (ex : automobile, poids lourd, motocyclette) ou ferroviaire (train, tramway, métro).

### ARRIERE-PLAN TECHNOLOGIQUE DE L'INVENTION

De manière connue en soi, il existe un besoin de traiter les particules et poussières résultant de l'abrasion des systèmes de freinage à friction. Les particules et poussières peuvent être tout d'abord capturées par aspiration, comme décrit par exemple dans le document DE 42 40 873 C2 ou dans le document FR 3 046 644 et le flux est filtré ensuite contre une paroi/membrane filtrante.

Il est aussi connu, selon le document DE 20 2008 009 717 U1 de capter et retenir les particules et poussières dans le média filtrant, par exemple dont la section est en « U », lequel média filtrant est monté au plus près du support d'étrier.

Le document DE 10 2017 201736 décrit l'installation d'un simple cyclone pour séparer des particules de freinage. L'efficacité de séparation reste alors limitée.

En pratique, les systèmes avec média filtrant ne sont pas particulièrement efficaces à long terme. Lorsque le média filtrant est trop près de la zone de freinage, les températures peuvent avoisiner les 600°C, ce qui limite le choix du média filtrant et réduit les performances de réduction de polluants.

De plus, les particules et poussières capturées forment souvent un mélange disparate, en particulier lorsqu'il y a aussi de l'eau. La saturation en liquide de la membrane filtrante favorise un colmatage précoce par exemple.

Il existe donc un besoin pour des solutions fiables et robustes qui offrent un bon compromis efficacité / adaptation à la complexité des types de particules et poussières à séparer, tout au long de la durée de vie du dispositif de séparation.

Il est également souhaitable de limiter le risque de colmatage ou perte de charge lorsque le flux d'air à épurer est chargé en eau.

### OBJETS DE L'INVENTION

La présente invention a pour but de pallier un ou plusieurs des inconvénients susmentionnés en proposant un dispositif de séparation plus efficace pour séparer de manière adaptée les polluants issus d'un mélange collecté dans la zone de freinage.

A cet effet, l'invention concerne un dispositif de séparation de particules et poussières de freinage, pour collecter des particules et poussières produites par un ou des patins d'un ensemble de frein, le dispositif comprenant :
- un boîtier disposant d'une entrée pour l'admission d'un flux d'air chargé en particules et poussières de freinage et une sortie pour l'évacuation d'air purifié, le boîtier comprenant une paroi latérale tubulaire s'étendant autour d'un axe longitudinal et une paroi de fond,
- des moyens de séparation, espacés axialement par rapport à la paroi de fond pour retenir au moins une partie des particules et des poussières de freinage admises via l'entrée,
- une zone de piégeage des particules et poussières séparées par les moyens de séparation, et
- une zone d'aval délimitée par les moyens de séparation dans le boîtier, la zone d'aval étant située, au moins en partie, axialement à l'opposé de l'entrée et/ou de la zone de piégeage,
avec la particularité que les moyens de séparation comprennent un groupement de cyclones, logé dans le boîtier et permettant de séparer des particules et des poussières ainsi que des gouttelettes d'eau/de liquide présentes dans le flux d'air admis via l'entrée, chacun des cyclones comprenant un corps effilé vers le bas ayant une extrémité inférieure débouchant via un orifice de décharge gravitaire dans ladite zone de piégeage, le corps délimitant une chambre de séparation, le groupement comprenant :
- une entrée d'alimentation axiale commune aux cyclones du groupement, pourvue d'un raccord pour un conduit axial permettant au flux d'air admis par l'entrée de circuler jusqu'au groupement de cyclones par le dessous ;
- une pluralité de cheminées évacuant chacune de l'air d'une chambre de séparation et débouchant dans la zone d'aval à l'intérieur du boîtier ; et
- un collecteur d'admission présentant une pluralité de branches tubulaires pour répartir ledit flux d'air chargé en particules et poussières, en s'étendant entre l'entrée d'alimentation axiale et chaque chambre de séparation respective des cyclones, chacune des branches tubulaires débouchant radialement dans une chambre de séparation correspondante, tous les corps des cyclones étant placés radialement à distance de l'axe longitudinal, entre l'axe longitudinal et la paroi latérale.

Typiquement, le groupement de cyclones forme une barrière transversale reliée de façon étanche au conduit axial, la barrière transversale et le conduit axial empêchant une remontée vers la zone d'aval du mélange hétérogène liquide-solide pendant le fonctionnement du dispositif. De préférence, seuls les orifices de décharge gravitaire permettent de remplir la zone de piégeage en un mélange hétérogène liquide-solide pendant le fonctionnement du dispositif. Ainsi, en cas d'àcoup lors d'une phase de roulement du véhicule, on évite la pollution de la zone d'aval.

Avantageusement, l'entrée du dispositif est formée en bas du boîtier et le conduit axial fait circuler, de préférence, linéairement le flux jusqu'à une zone d'embranchement du collecteur d'admission. Avec ce type de disposition, on peut former un dispositif compact en largeur, avec une section réduite de boîtier tout en divisant le flux en autant de flux que de cellules cycloniques (ces cellules étant montées en parallèle). Par ailleurs, lorsqu'on intègre un étage de filtration, centralisé ou prévu dans le boîtier (en aval des moyens de séparation par effet centrifuge), le dispositif permet de traiter très efficacement toutes les poussières de frein et notamment : les particules métalliques d'une part, et les particules fines et poussières de taille variable d'autre part, même en présence d'eau.

La séparation ou pré-séparation permise par le groupement de cyclones peut être ainsi efficace, en facilitant la retombée par gravité de toutes les particules ou poussières lourdes, ce qui permet de gagner en durée de vie pour un étage de filtration situé en aval de ces moyens de séparation. Dans tout ce qui suit, les particules ou poussières lourdes doivent être comprises comme des particules ou poussières de taille relativement importante et tombant vite ainsi sous l'effet de la gravité. Le recours à des branches de guidage tangentiel du flux autour de chaque axe sensiblement vertical des cyclones permet d'exercer une force centrifuge qui contribue à accroître par agglomération la taille des poussières repoussées vers l'extérieur d'une part et à faciliter la retombée par gravité de ces poussières via l'orifice de décharge gravitaire d'autre part.

Selon une particularité, le groupement de cyclones forme une unité structurelle insérable d'un seul tenant dans le volume intérieur du boîtier.

De préférence, le groupement de cyclones forme une unité structurelle multi-cyclone emboîtable de façon étanche et centrée sur le conduit axial formé en tant que projection axiale interne dans un bol appartenant au boîtier.

Le collecteur d'admission permet de distribuer le flux de façon symétrique. Le dispositif de séparation peut alors limiter la longueur de trajet de circulation du flux à traiter au niveau du groupement de cyclones, tout en ayant une bonne efficacité, sachant qu'on répartit radialement le flux (par un premier effet de déviation qui précède immédiatement l'effet cyclone), vers un nombre important de cyclones, par exemple environ dix cyclones.

L'entrée du dispositif est, de préférence, réalisée comme une extrémité axiale du conduit axial, qui est typiquement un conduit cylindrique.

Selon une particularité, les cheminées font saillie vers le haut par rapport à un flasque du groupement permettant le montage dans le boîtier.

Selon une option, les cheminées font saillie vers le haut par rapport à un flasque du groupement permettant de délimiter un dessus du collecteur d'admission, les cheminées ayant des orientations de sortie convergentes pour éloigner l'air sortant des cyclones d'une paroi latérale du boîtier.

Dans des options de réalisation du dispositif conforme à l'invention, on peut avoir recours à une ou plusieurs des dispositions suivantes:
- les cyclones du groupement comprennent au moins six cyclones.
- l'entrée du dispositif est située à une extrémité axiale inférieure du dispositif et est plus basse que le niveau de n'importe lequel des orifices de décharge gravitaire, en étant de préférence plus basse qu'un point bas de la zone de piégeage.
- la zone de piégeage présente un sous-compartiment de collecte de liquide, en particulier d'eau, un média filtrant (optionnellement à effet coalesceur) étant interposé entre le compartiment et le reste de la zone de piégeage.
- le sous-compartiment inclut une trappe de décharge de liquide filtré au travers du média filtrant, la trappe étant agencée au niveau d'un point bas du boîtier.
- les cyclones sont répartis de façon annulaire autour de l'entrée d'alimentation axiale commune aux cyclones.
- chacune des branches tubulaires débouche radialement (vers l'extérieur / de façon centrifuge) dans une chambre de séparation correspondant.
- la zone de piégeage dans laquelle tous les orifices de décharge gravitaire débouchent étant délimitée par la paroi de fond du boîtier.
- la zone de piégeage s'étend autour du conduit axial de façon annulaire avec une extension radiale allant du conduit axial jusqu'à la paroi latérale.
- le conduit axial traverse la zone de piégeage pour former l'entrée et/ou faire communiquer l'entrée avec une zone d'embranchement du collecteur d'admission via l'entrée d'alimentation axiale.
- le nombre de cyclones peut être supérieur à 6, par exemple d'environ 8 ou 10 cyclones.
- le conduit axial forme un organe mâle s'engageant dans un raccord femelle formé intégralement avec le collecteur d'admission, typiquement dans un prolongement axial de la zone d'embranchement.
- le conduit axial forme un organe femelle s'engageant dans un raccord mâle formé intégralement avec le collecteur d'admission, typiquement dans un prolongement axial de la zone d'embranchement.
- les moyens de séparation sont réalisés en deux ou trois pièces moulées chacune en une matière plastique.
- chaque corps est connecté sélectivement à une branche du collecteur d'admission en étant intégralement formé avec elle, en une matière plastique moulée.
- le groupement de cyclones comprend un flasque supérieur transversal ayant une portion annulaire de fixation dans le boîtier, le flasque supérieur formant des parties radiales supérieures au sommet de chacun des corps des cyclones.
- chacune des cheminées s'étend en saillie axiale de part et d'autre du flasque supérieur.
- il existe une région annulaire formée le long du collecteur d'admission et qui est entourée elle-même par les cyclones du groupement, le raccordement étanche du conduit axial à l'entrée d'alimentation du collecteur d'admission empêchant l'air de circuler radialement dans cette région annulaire qui s'étend directement au-dessus de la zone de piégeage.
- la zone de piégeage est une zone délimitée par une paroi de fond du boîtier.
- le boîtier contient un élément filtrant comprenant un médium plissé et optionnellement un préfiltre, par exemple à base d'une mousse poreuse.

Selon une particularité, chacune des cheminées présente :
- un insert tubulaire en saillie axiale vers le bas par rapport au flasque supérieur, dont au moins une portion est en regard d'un débouché radial d'une des branches du collecteur d'admission, en s'étendant dans une chambre de séparation ; et
- un organe de décélération ayant une forme évasée en direction de la sortie, l'organe de décélération étant en saillie axiale vers le haut par rapport à une portion radiale du flasque supérieur.

Typiquement, les organes de décélération sont orientés en direction opposée par rapport à une paroi de fond du boîtier, par exemple en faisant face à une face d'entrée d'un média filtrant d'un élément filtrant placé dans le boîtier dans la zone d'aval.

Optionnellement, l'élément filtrant est espacé/distant axialement d'une sortie axiale du boîtier, de façon à délimiter une zone propre dans le creux d'un couvercle du boîtier.

Selon une option, le dispositif séparateur peut optionnellement comporter en outre un moyen coalesceur disposé intérieurement dans un élément tubulaire relié par un coude par le dessous au conduit axial, afin de séparer du liquide avant son entrée dans le conduit axial et/ou avant son entrée dans les cyclones. Typiquement l'élément tubulaire à coalesceur s'étend horizontalement, tandis que le conduit axial s'étend verticalement (tout comme les corps des cyclones qui sont allongés verticalement).

Il est proposé aussi une unité de séparation d'air se montant en série/en aval par rapport à une ligne de captation de poussières de freinage, l'unité de séparation comprenant le dispositif de séparation de particules et poussières de freinage selon l'invention, et comprenant en outre au moins un élément filtrant pourvu d'un média filtrant, sachant que l'élément filtrant est intégré intérieurement dans le boitier logeant le groupement à cyclones ou bien placé dans un boitier indépendant, en aval de la sortie du boîtier.

Typiquement, chaque élément filtrant de l'unité de séparation s'étend dans la zone d'aval à l'intérieur du boîtier en délimitant :
- une zone intermédiaire de circulation d'air purifié sortant des cyclones, en communication avec les cheminées ; et
- une zone propre en communication avec la sortie.

On obtient un agencement compact pour cumuler plusieurs fonctions de séparation dans un circuit de récupération de poussières de frein, pendant les phases de roulement d'un véhicule équipé du dispositif.

Selon une particularité, l'élément filtrant est traversé par un flux d'air qui circule parallèlement à l'axe longitudinal au travers du média filtrant.

Selon une autre particularité, l'élément filtrant présente une forme annulaire autour d'un espace intérieur creux, est traversé par un flux d'air qui circule de façon centripète depuis une région annulaire périphérique incluse dans la zone intermédiaire jusque dans l'espace intérieur creux inclus dans la zone propre.

Selon une option, les moyens de séparation et une paroi de fond du boîtier délimitent axialement entre eux la zone de piégeage, sous la forme d'un compartiment inférieur annulaire du boîtier.

De préférence, l'au moins un élément filtrant constitue un piège de particules solides plus fines que les particules et poussières stockées dans la zone de piégeage, l'élément filtrant s'étendant dans un compartiment supérieur du boîtier, en étant bloqué axialement entre un bord de prise d'un composant de boîtier et une extrémité annulaire du couvercle. Le bord de prise peut être optionnellement constitué par un épaulement annulaire interne du composant de boîtier.

Selon une option, le groupement de cyclones s'étend intérieurement dans un bol du boîtier, tandis que l'élément filtrant s'étend entièrement au-dessus du bol, la sortie du boîtier étant disposée axialement ou radialement dans un couvercle supérieur du boîtier amovible, le couvercle supérieur étant de préférence amovible par rapport au bol qui constitue une partie stationnaire reliée directement au véhicule.

Avec un tel agencement, il est permis de monter et démonter facilement l'élément filtrant, indépendamment du groupement de cyclones, éventuellement sans outil spécifique. Dans une option préférée, on peut prévoir des clips ou un filetage pour fixer le couvercle. Selon une option, le filtre est conçu comme une unité non démontable et l'ensemble du filtre est changé lors des opérations de maintenance.

Typiquement, le média filtrant est plissé en formant des lignes de plis qui sont soit perpendiculaires à l'axe longitudinal, soit parallèles à l'axe longitudinal.

Optionnellement, la structure de support de l'élément filtrant forme un détrompeur, conçu et agencé pour qu'il ne soit pas possible de maintenir le couvercle fermé (dans un état verrouillé) sans l'élément filtrant, rien ne s'opposant alors à un retrait du couvercle.

Dans une option, les premiers organes de fixation sont inaccessibles depuis l'extérieur du boîtier et comprennent ou consistent en des organes d'encliquetage élastiquement déformables, aptes à se désengager du composant de boîtier pour une orientation modifiée de la structure de support.

Le boîtier peut optionnellement contenir, dans la zone propre, un rotor de turbine pour permettre d'aspirer le flux d'air admis via l'entrée du boîtier.

Selon une particularité, on prévoit des moyens déflecteurs formés entre les cheminées et une face d'entrée du média filtrant. Optionnellement, les moyens déflecteurs comprennent :
- des trous de passage qui sont décalés radialement par rapport aux cheminées,
- et/ou des portions concaves de déflexion avec une surface concave de mise en rotation d'un flux d'air sortant d'une cheminée, les portions concaves de déflexion bordant ou faisant face à chaque cheminée des cyclones.

Eventuellement, les moyens déflecteurs sont supportés par ou s'étendent parallèlement à une paroi transversale parallèle à un flasque supérieur du groupement de cyclones, la paroi transversale.

Chacun des moyens déflecteurs peuvent être du type à face concave en regard d'un organe de décélération des cheminées (organe évasé faisant saillie axialement vers le haut depuis un flasque supérieur des moyens de séparation par cyclones).

Selon une option, les particules séparées sont piégées dans le boîtier et colletées dans une zone de piégeage dont la hauteur mesurée depuis les cyclones est supérieure à la hauteur du corps des cyclones mesurée entre le flasque supérieur et l'extrémité annulaire formant l'ouverture de décharge gravitaire. Typiquement la hauteur de la zone de piégeage sous les cyclones est inférieure à la hauteur de la zone d'aval Z2 délimitée par le boîtier, compte tenu du volume occupé par le ou les éléments filtrants.

Plus généralement, il est avantageusement permis d'obtenir un ensemble de frein non polluant comprenant :
- l'unité de séparation d'air selon l'invention,
- un support d'étrier,
- un disque rotor tournant autour d'un axe,
- au moins deux patins mobiles destinés à venir en appui sur le disque rotor pour le freiner sous une force de serrage fournie par un étrier, les patins comprenant du matériau de friction susceptible de relâcher des particules résultant de l'abrasion,
- un dispositif collecteur agencé au moins en partie à proximité du support d'étrier, le dispositif collecteur comprenant :
- au moins une entrée, et
- un élément de liaison, raccordé à une sortie du dispositif collecteur et en communication avec l'entrée du boîtier de l'unité de séparation d'air.

Selon une option, le dispositif collecteur présente des moyens d'aspiration agencés au moins en partie à proximité du support d'étrier, de façon à ce que chaque entrée du dispositif collecteur soit définie par une zone d'aspiration formée au voisinage de chaque patin et délimitée par un déflecteur.

Selon un autre aspect, on propose une utilisation du dispositif de séparation selon l'invention dans un véhicule ou engin roulant générant des particules et des poussières de freinage, avec la particularité que l'entrée formée par le boîtier définit une canule sur laquelle est fixé un élément de liaison, de préférence un tuyau souple, pour la liaison à un dispositif collecteur de poussières de freinage, le boîtier étant attaché par des moyens de fixation à une jambe d'un amortisseur de suspension.

Selon un autre aspect, on propose une utilisation du dispositif de séparation selon l'invention dans un véhicule ou engin roulant générant des particules et des poussières de freinage, avec la particularité que la zone de piégeage est formée par un étage inférieur du dispositif de séparation et sert à conserver des particules et des poussières de freinage ainsi que des gouttelettes de liquide séparées par le groupement de cyclones autour d'un conduit axial acheminant de façon ascendante un flux d'air brut directement dans le collecteur d'admission.

La séparation des particules/poussières solides et de l'eau permise par le groupement à cyclones du dispositif peut être une séparation relativement grossière ciblant notamment les particules de poussières les plus lourdes, ce qui permet ensuite d'utiliser un étage de filtration dont le ou les médias seront moins vite saturés (l'eau n'étant pas un fluide compressible, et les poussières de gros calibre étant retenues dans la zone de piégeage).

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
**[****Fig. 1****]** La figure 1 illustre par une vue en coupe longitudinale un dispositif de séparation de particules d'un flux d'air, incluant un groupement de cyclones dans un boîtier du dispositif, suivant un premier mode de réalisation.
**[****Fig. 2****]** La figure 2 est une vue en perspective éclatée montrant un exemple de montage du dispositif de la figure 1, avec un média filtrant situé dans le boîtier entre le groupement de cyclones et une sortie du dispositif.
**[****Fig. 3A****]** La figure 3A est une vue en coupe longitudinale montrant le perspective par le dessous, montrant plus en détail le groupement de cyclones utilisable dans le dispositif de séparation de la figure 1, ici avec les corps de cyclones répartis de façon annulaire autour d'un collecteur d'admission.
**[****Fig. 3B****]** La figure 3B est une vue en coupe transversale montrant le dessous d'un flasque du groupement de cyclones ainsi que les entrées tangentielles respectives des cyclones formées par la pluralité de branches du collecteur d'admission.
**[****Fig. 4A****]** La figure 4A est une vue de détail, en coupe longitudinale, d'un agencement de filtration en aval des cyclones du groupement, selon une variante de réalisation conforme à l'invention.
**[****Fig. 4B****]** La figure 4B est une vue de détail, en coupe longitudinale, d'un agencement de filtration en aval des cyclones du groupement, selon une autre variante de réalisation conforme à l'invention.
**[****Fig. 5****]** La figure 5 montre le dessus d'un dispositif de séparation conforme à l'invention, avec un ensemble de filtration incluant plusieurs médias plissés enveloppés chacun dans une capsule perméable au flux d'air.
**[****Fig. 6****]** La figure 6 est une vue similaire à celle de la figure 5, montrant un autre mode de réalisation pour réaliser une filtration entre le groupement de cylcones et la sortie.
**[****Fig. 7****]** La figure 7 illustre un exemple d'utilisation du dispositif de séparation de la figure 1, dans un ensemble de frein ayant une fonction d'aspiration de poussières de freinage.
**[****Fig. 8****]** La figure 8 illustre de façon schématique, par une vue en coupe longitudinale, un détail de réalisation d'éléments de guidage des flux d'air respectifs issus des sorties du groupement de cyclones, de tels éléments de guidage et/ou d'impaction pouvant évacuer des particules de poussière du flux d'air atteignant un étage de filtration supérieur.
**[****Fig. 9****]** La figure 9 illustre de façon schématique, par une vue en coupe longitudinale, un exemple d'intégration de moyens d'aspirations motorisés dans le boîtier, ici en aval du groupement de cyclones.

### DESCRIPTION DES MODES DE REALISATION

Ci-après un exposé détaillé de plusieurs modes de réalisation de l'invention assorti d'exemples et de référence aux dessins. Sur les différentes figures, des références identiques indiquent des éléments identiques ou similaires.

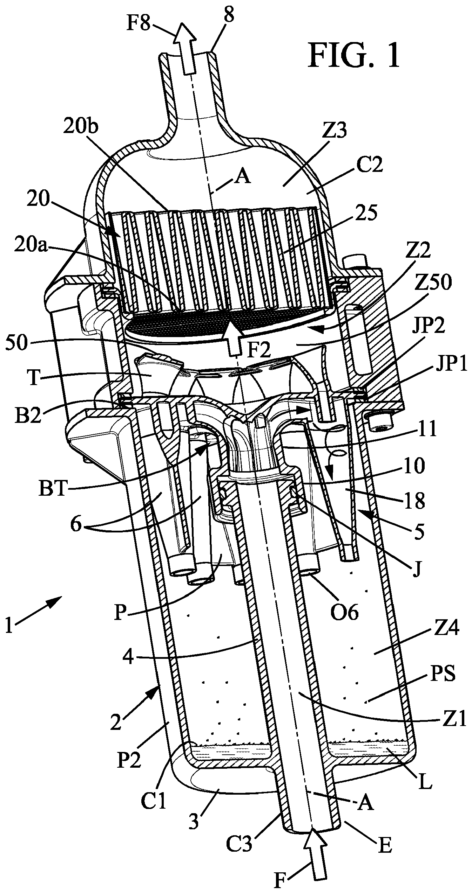

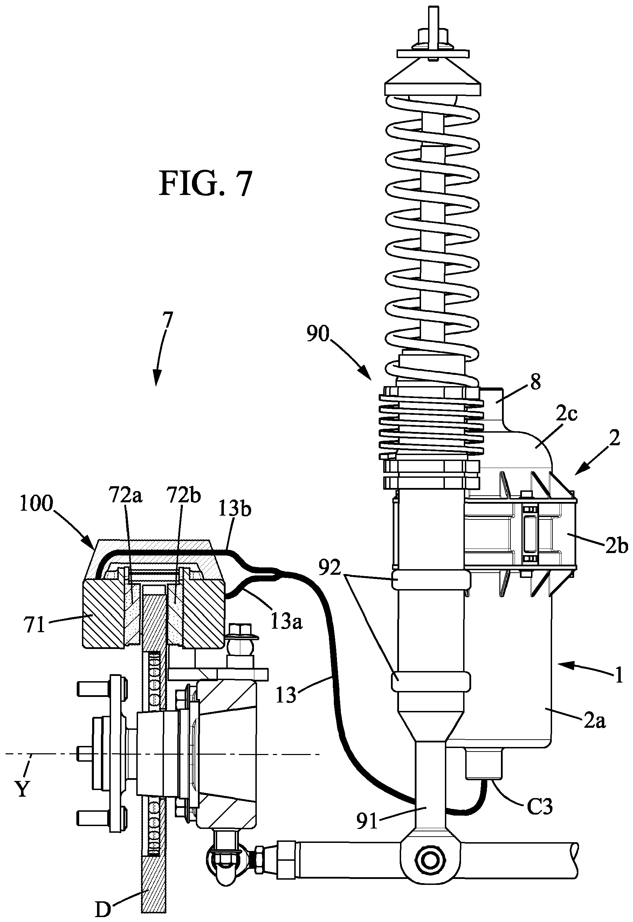

En référence aux figures 1 et 7, on prévoit un dispositif 1 de séparation prévu pour séparer et collecter des particules et poussières produites par des patins 72a, 72b d'un ensemble de frein 7. Le dispositif 1 comprend un boîtier 2 qui présente une paroi supérieure et une paroi inférieure.

Comme bien visible sur la figure 7, le boîtier 2 est raccordable de façon interchangeable à une ou éventuellement plusieurs conduites d'un circuit d'alimentation en air chargé de poussières de freinage. Ce circuit est raccordé à un dispositif collecteur 100 appartenant à un ensemble de frein 7. Ici, le dispositif collecteur 100 présente des moyens d'aspiration agencés au moins en partie à proximité du support d'étrier 71 associé au disque rotor D, de façon à ce que chaque entrée du dispositif collecteur 100 soit définie par une zone d'aspiration formée au voisinage de chaque patin 72a, 72b qui s'engage contre le disque rotor D. L'entrée du dispositif collecteur 100 peut être délimitée par un déflecteur, par exemple comme décrit dans le document FR 3 046 644.

Une entrée E formée par le boîtier 2 peut définir une canule C3 sur laquelle est fixé un élément de liaison 13, ici un tuyau souple, pour la liaison au dispositif collecteur 100. Le tuyau se dédouble optionnellement avec deux branches 13a, 13b pour permettre de collecter les poussières provenant des zones de friction associées respectivement aux deux patins 72a, 72b.

Le boîtier 2 peut être rendu solidaire d'un composant installé en partie basse du véhicule ou engin roulant équipé de l'ensemble de frein 7. Dans l'exemple illustré, le boîtier 2 est attaché, grâce à des moyens de fixation 92 (éventuellement avec le recours un vissage/boulonnage), à une jambe 91 d'un amortisseur de suspension 90.

Comme illustré sur la vue en coupe longitudinale de la figure 1, le boîtier 2 comprend une paroi externe latérale P2 qui s'étend depuis la paroi de fond 3 jusqu'à la paroi supérieure du boîtier 2, autour d'un axe longitudinal A. La paroi de fond 3 est traversée par un tube ou organe de canalisation similaire formant un conduit axial 4, au niveau d'une extrémité inférieure E du dispositif 1. Optionnellement, on peut prévoir une ouverture permettant une purge d'eau par écoulement gravitaire dans la paroi de fond 3.

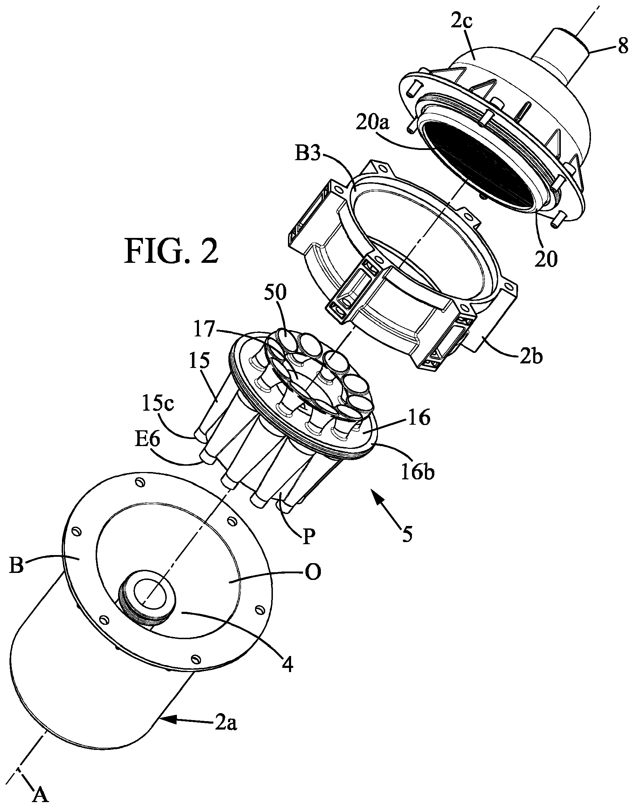

Le boîtier 2 du dispositif 1 peut présenter une forme sensiblement tubulaire autour d'un axe longitudinal A, qui peut être un axe central sensiblement vertical. Dans l'exemple non limitatif des figures, la paroi de fond 3 du boîtier 2 est définie par ou fait partie d'un bol 2a typiquement en métal ou en plastique, visible sur la figure 2. Ce bol 2a peut optionnellement former une partie stationnaire dans l'exemple représenté. Une conception cylindrique de la portion latérale du bol 2a est utilisée dans le cas non limitatif de ces figures 1 et 2.

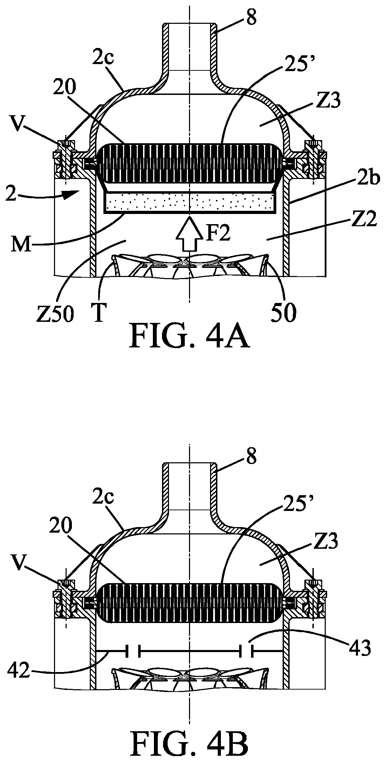

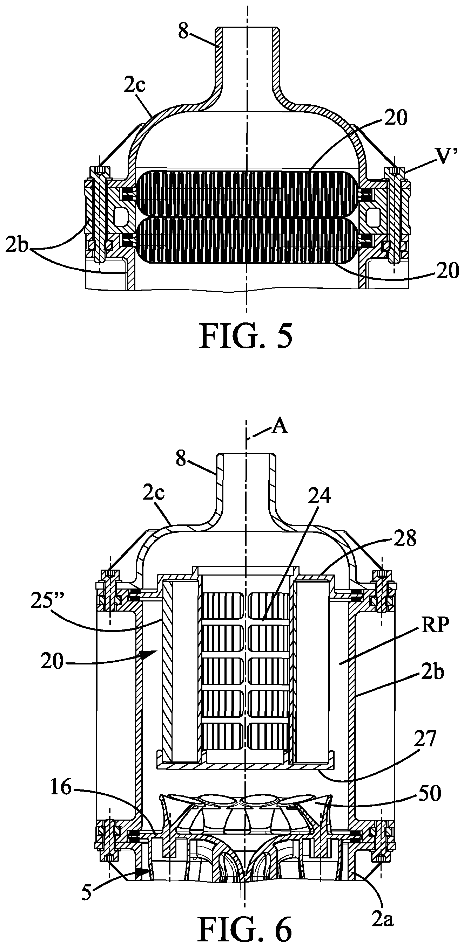

En référence à la figure 2, le reste du boîtier 2 est fixé de manière amovible par rapport à ce bol 2a pour obturer de façon étanche l'ouverture O du bol 2a. La paroi supérieure est formée ici par un couvercle 2c et optionnellement une partie annulaire ou composant de boîtier intermédiaire 2b, qui sont reliés de manière étanche au bol 2a (directement ou indirectement), ici par vissage comme illustré avec les vis V, V' sur les figures 4A-4B et 5 par exemple. Le bol 2a peut présenter une bride B annulaire pour la fixation par des vis. Alternativement, un filetage mâle peut être prévu sur le couvercle 2c pour s'engager avec un filetage femelle formé dans une extrémité supérieure d'une paroi latérale du bol 2a. Une ouverture supérieure est formée dans ce couvercle 2c par une canule. Plus généralement, on peut voir que le boîtier 2 présente une sortie 8 qui peut être située à l'opposé de la paroi de fond 3. L'exemple illustré de la figure 1 avec une canule centrale pour former cette sortie 8 est seulement donné à titre d'exemple non limitatif.

Dans des options de réalisation, le couvercle 2c peut présenter une forme aplatie plutôt qu'une forme de dôme. Par ailleurs, la sortie 8 peut correspondre à une ouverture qui peut directement former un passage intérieur d'une turbine. A titre d'exemple, le bol 2a ou composant de boîtier similaire peut être fermé par une turbine électrique 32, 33, 34.

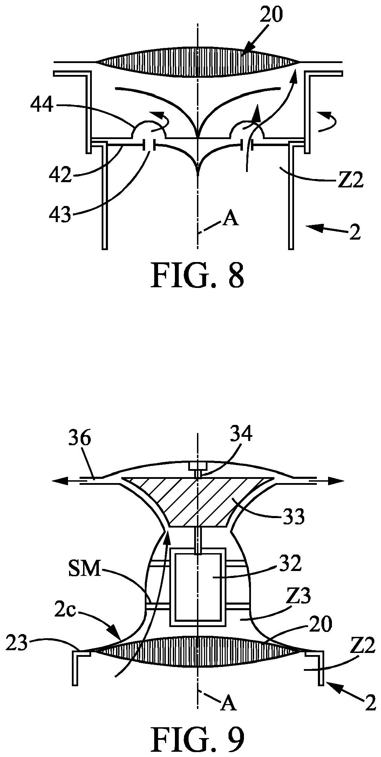

La figure 9 illustre schématiquement une option d'intégration d'un rotor de turbine 33 dans la zone propre Z3 (zone typiquement adjacente à la zone de sortie), en aval d'un élément filtrant 20. Le boîtier 2 peut présenter alors un compartiment supérieur suffisant pour loger ce type de composant fonctionnel, dans une position par exemple plus haute qu'une zone de fixation 23 pour maintenir un bord annulaire de l'élément filtrant 20 solidaire du boîtier 2. Le couvercle 2c peut participer au maintien de l'élément filtrant 20 par une attache sur le reste du boîtier 2 tout en bloquant axialement l'élément filtrant 2. Dans une autre option - alternative ou complémentaire, le rotor de turbine 33 peut être placé en amont d'un étage de filtration.

Sur la figure 9, on prévoit un moteur électrique 32 maintenu intérieurement dans le couvercle 2c par des moyens de support SM rendus solidaires de et/ou intégralement formés avec le couvercle 2c. L'axe longitudinal A peut couper l'élément filtrant 20 optionnel, le moteur électrique 32 et le rotor de turbine 33. Un arbre 34 de rotation, définissant un axe de rotation parallèle ou confondu avec l'axe longitudinal A, permet d'entraîner le rotor de turbine 33 en rotation. Cet arbre 34 peut s'étendre intérieurement dans le boîtier 2 (par exemple entièrement à l'intérieur du boîtier 2, ici en étant placé au-dessus du média filtrant 25 de l'élément filtrant 20). L'air purifié de la zone Z3 peut s'échapper par des passages radiaux 36 formés autour d'aubes du rotor 33.

Avec ou sans la présence d'une turbine, la présence d'au moins un élément filtrant 20 est préférée afin de définir une zone propre Z3 interne au boîtier 2. L'exemple de la figure 9 montre un élément filtrant 20 monté transversalement, en étant supporté par un épaulement ou une bride B du boîtier 2. Avec ou sans présence d'une turbine électrique, l'élément filtrant 20 peut être plus large que haut (avec un diamètre supérieur à sa hauteur), tout en présentant une surface d'entrée du média filtrant 25 supérieure à la surface disponible transversalement dans le boîtier 2, grâce à un plissage de ce média 25.

Dans tous les cas, il est prévu une séparation principale de poussières et particules d'un flux entrant F par des moyens de séparation 5 du type à cyclones, de tels moyens de séparation 5 délimitant dans le boîtier 2 une zone d'amont Z1, en communication avec l'entrée E du dispositif 1, et une zone d'aval Z2 où peut circuler un flux épuré, à destination de la sortie 8.

Ainsi en référence à la figure 1, on prévoit que le dispositif de séparation 1 présente, entre l'entrée E pour l'admission du flux d'air F chargé en particules et poussières de freinage et la sortie 8 pour l'évacuation d'air purifié F8, des moyens de séparation 5 qui sont espacés axialement par rapport à la paroi de fond 3 et qui permettent de retenir au moins une partie des particules et des poussières de freinage admises via l'entrée E, en faisant tomber ces particules et poussières PS dans une zone de piégeage Z4. Les moyens de séparation 5 sont conçus et agencés pour faire tourner le flux d'air avec un effet centrifuge, sans la moindre partie mobile dans ces moyens de séparation 5 ni la moindre paroi de filtration (ce qui simplifie la conception de ces moyens 5 et limite la perte de charge).

Ici, la zone de piégeage Z4 est délimitée par la paroi de fond 3 et le bas de la paroi latérale P2, en s'étendant sous les moyens de séparation 5. La zone d'aval Z2 délimitée par les moyens de séparation 5 s'étend entièrement au-dessus des moyens de séparation 5 dans le boîtier, axialement à l'opposé de l'entrée E. En cas de présence d'un ou plusieurs éléments filtrants 20 dans la zone d'aval Z2, on comprend que la zone propre Z3 où circule l'air filtré constitue une sous-zone (typiquement supérieure) de la zone d'aval Z2.

On décrit à présent plus en détail les moyens de séparation 5 qui subdivisent le flux entrant F et utilisent un effet centrifuge pour récupérer les particules les plus denses dans la zone de piégeage Z4.

En référence aux figures 1, 2 et 3A-3B, les moyens de séparation 5 comprennent ou consistent en un groupement de cyclones 6, logé dans le boîtier 2 et permettant de séparer des particules et des poussières en les évacuant par des orifices 06 de décharge gravitaire. Les cyclones 6 peuvent être répartis autour d'une même entrée d'alimentation 10 commune formée par ou connectée directement avec l'entrée E. Dans l'exemple illustré, l'entrée E est formée par une canule C3 en saillie axialement vers le bas, la sortie pouvant être optionnellement formée en haut du boîtier 2, en débouchant axialement hors du couvercle 2c. L'entrée E et l'entrée d'alimentation 10 des moyens de séparation 5 peuvent être alignées verticalement, en étant traversées par l'axe longitudinal A.

Chacun des cyclones 6 comporte un corps 15 effilé vers le bas ayant une extrémité inférieure 16 débouchant via un orifice 06 de décharge gravitaire dans la zone de piégeage Z4 délimité par un compartiment inférieur C1 du boîtier 2. Les corps 15 sont répartis de façon annulaire autour de l'axe longitudinal A et autour de l'entrée d'alimentation 10 commune à tous les cyclones 6 du groupement. Il est prévu un collecteur d'admission 11 pour répartir le flux F dans les différents cyclones 6, qui sont au nombre de dix dans l'exemple non limitatif des dessins, ce nombre étant typiquement supérieur à six. L'entrée d'alimentation 10 présente un raccord tubulaire 10a pour connecter par emboîtement axial le collecteur d'admission 11 au conduit 4 incluant l'entrée E. Dans un mode de réalisation préféré, on peut réaliser d'une seule pièce le conduit 4 et le bol 2a formant la paroi de fond 3 du boîtier 2.

Des parois de rigidification P qui joignent deux à deux des corps 15 adjacents dans le groupement peuvent permettent de former une cloison interne tubulaire, concentrique autour du conduit axial 4 qui définit l'entrée E. Cette cloison non ajourée s'étend jusqu'à une extrémité inférieure E6 annulaire du groupement de cyclones 6. Le conduit axial 4 s'emboîte avec le raccord tubulaire 10a (ici un raccord central) de l'entrée d'alimentation 10 et sépare de façon étanche une zone d'aval Z1 correspondant à l'intérieur du tube formant ce conduit 4 et la zone de piégeage Z4 formée sous le groupement de cyclones 6.

La formation d'une cloison interne tubulaire continue, par les cyclones 6 et les parois de rigidification P, peut permettre d'empêcher le mélange hétérogène collecté au fond du compartiment C1 d'être projeté (en cas d'à-coup lors du roulement du véhicule embarquant le dispositif 1) vers des joints techniques annulaires participant à l'étanchéité de la connexion entre le groupement de cyclones 6 et la paroi latérale P2 du boîtier 2. Un risque de vieillissement prématuré des joints peut être évité et/ou cela offre plus de choix pour le joint à utiliser. On comprend que cette conception est avantageuse pour obtenir un effet de bouclier anti-remontée de substance brute, les parois P étant ici intégralement formés avec les corps 15 des cyclones 6.

Un contact d'étanchéité annulaire est en outre réalisé entre une portée cylindrique F10 du raccord 10a et un joint annulaire J rapporté sur une extrémité supérieure du conduit axial 4, par exemple dans une gorge prévue à cet effet. Dans cet exemple, le conduit axial 4 forme un organe mâle s'engageant dans un raccord de type femelle formé intégralement avec le collecteur d'admission 11, typiquement dans un prolongement axial d'une zone d'embranchement du collecteur d'admission 11. Dans une variante, le conduit axial 4 peut aussi former un organe femelle s'engageant dans un raccord tubulaire 10a de type mâle, formé intégralement avec le collecteur d'admission 11, typiquement dans un prolongement axial de la zone d'embranchement.

Les moyens 5 de séparation constitués par les cyclones 6, le flasque 16 commun et le collecteur 11 peuvent être réalisés en deux ou trois pièces moulées chacune en une matière plastique. Par exemple le flasque 16 qui inclut la partie centrale 17 appartenant au collecteur 11 peut être réalisée d'une pièce. Optionnellement, tout ou partie des cheminées 50 est aussi venue de matière avec le flasque 16.

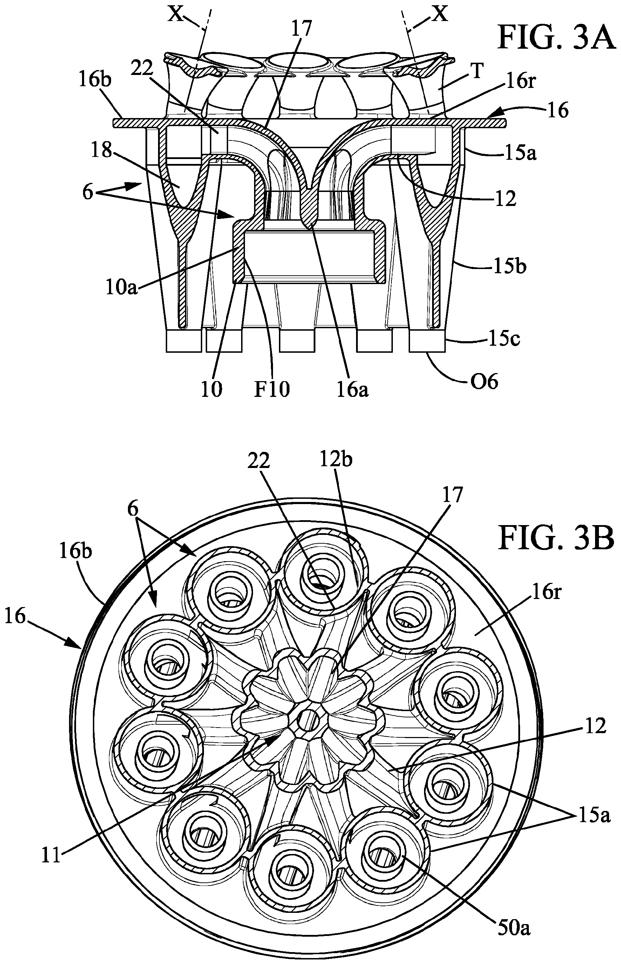

Comme visible sur les figures 3A et 3B notamment, chaque cyclone 6 est alimenté en air brut par une entrée 22 conçue comme l'extrémité, distale par rapport à l'axe longitudinal A, d'une des branches 12 tubulaires du collecteur d'admission 11. Les branches 12 fusionnent en un embranchement commun inclus dans une portion tubulaire constituant l'entrée d'alimentation 10 commune du collecteur d'admission 11. De l'air purifié (pour partie) peut sortir de la chambre de séparation 18 des cyclones 6 par le haut, via une cheminée 50 raccordée à une paroi de dessus du groupement de cyclones 6. Une telle paroi peut constituer un flasque 16 appartenant à et servant à la fixation du groupement.

Sur les figures 3A et 3B, on peut voir que chaque corps 15 comprend une partie cylindrique 15a et une partie convergente substantiellement conique 15b, au moins une entrée 22 montée tangentiellement sur la partie cylindrique 15a, une extrémité annulaire 15c inférieure pouvant prolonger de façon cylindrique le bas plus étroit de la partie convergente substantiellement conique 15b et d'un élément radial de paroi supérieure recouvrant la partie cylindrique 15a par le dessus. La chambre de séparation 18 délimitée par le corps 15 est ainsi progressivement rétrécie vers le bas. L'orifice 06, formé au bas du cyclone 6 dans l'extrémité annulaire 15c peut être situé à l'aplomb d'une sortie d'air du cyclone 6 formée par une des cheminées 50.

Ici, on prévoit optionnellement un flasque supérieur 16 pour permettre de monter le groupement de cyclones 6 sur un rebord ou bord récepteur B2 du boîtier 2. Le flasque supérieur 16, qui peut être réalisé d'une pièce, est pourvu de passages pour l'air ascendant au niveau des cheminées 50 respectives des cyclones 6. Le flasque supérieur 16 peut aussi former une clé de voûte 16a dans une partie centrale 17 entourée par les cheminées 50, de façon à former un dessus respectif de chacune des branches 12 et un dessus de la zone d'embranchement (zone de divergence) du collecteur d'admission 11. La partie centrale 17 forme les arcs de voûte. La partie centrale 17 forme le dessus du collecteur d'admission 11. Le profil des branches 12 respectives est ici sensiblement en quart d'anneau, pour ce qui concerne leur profil vu dans une coupe longitudinale du dispositif 1. La partie basse arquée des branches 12 est formée sensiblement au même niveau de hauteur que la clé de voûte 16a et rejoint axialement le raccord 10a de forme cylindrique.

La zone d'embranchement est par exemple centrale pour répartir le flux de façon centrifuge, dans au moins six directions distinctes, par exemple dix directions distinctes dans le cas des dessins illustrés. Le collecteur d'admission 11 peut alors former un nombre correspondant d'entrées 22 pour délivrer un flux tangentiel, de façon centrifuge.

Chaque cheminée 50 d'un cyclone 6 inclut un insert tubulaire 50a en saillie axiale vers le bas par rapport au flasque supérieur 16, dont au moins une portion est en regard d'un débouché radial 12b d'une des branches 12 du collecteur d'admission 11. Le débouché radial 12b est décalé d'un côté par rapport à l'axe central de l'insert tubulaire 50a, comme bien visible sur la figure 3B (avec une forme de « b » pour le trajet de circulation autour de chaque insert tubulaire 50a), afin de privilégier un sens de rotation pour l'air admis via la branche 12. Ceci permet de dévier la fraction de flux d'air amenée tangentiellement par cette branche 12 au niveau de l'entrée 22 de la chambre de séparation 18, l'air étant mis en rotation autour du cylindre ou tube formé par l'insert 50a qui guide (avec effet de centrifugation) les particules solides et les poussières contre la face interne du corps 15 pour les faire chuter vers l'orifice 06.

Sur les figures 1 et 3B, on peut voir que le groupement à cyclones 6 forme une barrière transversale BT vis-à-vis des impuretés solides PS collectées dans la zone de piégeage Z4. La répartition denses des cyclones 6, ici au nombre de dix et sans écartement significatif /rupture de continuité dans cette répartition, améliore le compromis compacité/efficacité de séparation.

Dans l'exemple non limitatif des figures, le flasque supérieur 16 réalise une séparation étanche en délimitant la zone d'aval Z2 par rapport à la zone de piégeage Z4. De plus, le collecteur d'admission 11 et la paroi tubulaire du conduit axial 4 réalisent une séparation étanche de la zone d'amont Z par rapport à la zone de piégeage Z4. La traversée du flasque 16 n'est possible que pour des flux ayant traversé successivement :
- l'entrée d'alimentation 10 unique (dans laquelle se déverse la totalité du flux chargé F admis par l'entrée E) et les branches 12 de déviation centrifuge du collecteur 11,
- la chambre de séparation 18, et
- les cheminées 50.

On peut noter que le dispositif 1 peut limiter la longueur de trajet de circulation du flux à traiter tout en ayant une bonne efficacité, sachant qu'on répartit radialement le flux, de manière centrifuge par un premier effet de déviation, vers un nombre important de cyclones 6, par exemple dix cyclones 6.

Une bride B du bol 2a forme par exemple le bord récepteur B2. Une bordure annulaire 16b du flasque 16 peut, selon une option, être pincée/prise en sandwich avec deux joints plats JP1, JP2 (visibles sur la figure 1), entre le bord récepteur B2 et un composant de boîtier 2b superposé au bol 2a.

Les cheminées 50 peuvent présenter un profil permettant d'évacuer, avec un effet de décélération, l'air qui s'échappe naturellement par le haut des chambres de séparation 18. Par exemple, chacune des cheminées 50 s'étend en saillie axiale de part et d'autre du flasque supérieur 16, en formant un organe de décélération T, tubulaire, ayant une forme évasée en direction de la sortie 8. L'organe de décélération T dépasse sur le dessus de la portion radiale annulaire sensiblement plane 16r du flasque supérieur 16 et peut dévier le flux d'air sortant d'une chambre de séparation 18 en étant légèrement coudé vers l'intérieur, par exemple en s'étendant autour d'un axe X qui dévie de 20 à 50° par rapport à la verticale, comme visible notamment sur la figure 3A.

Dans des formes de réalisation utilisant un élément filtrant 20 logé dans le volume intérieur du boîtier 2, les axes X respectifs définis par les organes de décélération T se croisent en un point d'intersection central contenu dans le volume intérieur du boîtier 2. Une symétrie des cyclones 6 autour de l'axe longitudinal A est préférée lorsque le conduit axial 4 est un conduit central du boîtier 2.

Dans ce qui suit, des modes d'intégration d'un ou plusieurs éléments filtrants 20, typiquement dans le volume intérieur du boîtier 2, sont décrits plus en détail.

Dans le cas des figures 1 et 2, un élément filtrant 20 conçu pour filtrer un flux d'air chargé en particules fines est placé en aval du séparateur cyclonique formé par le groupement de dix cyclones 6. Il permet d'arrêter les particules de frein restantes qui n'ont pas été séparées/collectées dans la zone de piégeage Z4. Le média 25 est ici plissé, avec des lignes de pliage qui s'étendent perpendiculairement à l'axe longitudinal A. Cet élément filtrant 20 est traversé par un flux d'air F2 qui circule parallèlement à l'axe longitudinal A, au travers du média filtrant 25, en entrant par une face d'entrée 20a qui fait face aux sorties des cheminées 50, et en sortant par une face de sortie 20b de l'élément filtrant 20. La face de sortie 20b s'étend ici parallèlement à la face d'entrée 20a.

Une étanchéité annulaire entre la zone intermédiaire Z50, située juste au-dessus du flasque 16, et la zone propre Z3 délimitée axialement par la face de sortie 20b et en communication avec la sortie 8 (ici une sortie axiale) est obtenue dans une zone périphérique de contact. Un tel contact annulaire est par exemple réalisé entre un bord d'un flasque de support du média 25 et des tronçons superposés de la paroi latérale P2. Ici, on prévoit un bord de prise interne B3 dans un composant intermédiaire 2b, sur lequel vient buter la face inférieure du bord du flasque. Le couvercle 2c vient ensuite recouvrir ce bord du flasque peut être intercalé et compressé entre deux joints, à l'état fixé (ici vissé) du couvercle 2c sur le composant intermédiaire 2b. Ce type de fixation du couvercle 2c sur un composant intermédiaire 2b est illustré également sur les figures 4A, 4B, 5 et 6, avec réalisation d'une étanchéité périphérique entre l'élément filtrant 20 (via une bordure annulaire d'un flasque) et la paroi latérale P2. Bien entendu, on peut réaliser l'étanchéité d'une autre manière, éventuellement en utilisant au moins une lèvre d'étanchéité flexible formée sur le flasque et prévue pour s'engager de façon étanche contre une face interne de la paroi latérale P2.

Plus généralement, on peut prévoir tout type d'élément filtrant 20, ici dans le boîtier 2, pour séparer des particules fines acheminées avec une vitesse plus faible que celle d'entrée dans les cyclones 6 respectifs, grâce à la structure évasée des organes de décélération T. La section totale cumulée des débouchés des cheminées 50 peut représenter au moins 140% de la section totale cumulée des passages cylindriques 15a formés dans les inserts 50a. De préférence, l'évasement de l'extrémité haute des cheminées 50 permet un accroissement progressif compris entre 180 et 250% pour la section de passage de sortie de chaque cyclone 6. Il en résulte une décroissance très significative de la vitesse des particules amenées dans le flux d'air F2 sur la face d'entrée 20a de l'élément filtrant 20 en regard des cheminées 50.

En référence à présent aux figures 4A et 4B, au moins un élément filtrant 20 est de type enveloppé dans une capsule perméable au flux d'air. Ce type de capsule permet de former une structure rigide de support d'un média 25' plissé, ici plissé avec des lignes de pliage perpendiculaire est à l'axe longitudinal A. Cet élément filtrant 20 est traversé par un flux d'air F2 qui circule parallèlement à l'axe longitudinal A, comme dans le cas de la figure 1 et est fonctionnellement similaire. Un flasque annulaire de la capsule permet la fixation étanche périphérique.

Comme illustré sur la figure 5, on peut empiler au moins deux éléments filtrants 20 du genre à format de capsule, en formant pour chacune une étanchéité annulaire périphérique. Plusieurs composants intermédiaires 2b, constitutifs du boîtier, peuvent être aussi empilés, éventuellement. On peut aussi prévoir un anneau de montage des éléments filtrants 20, l'anneau ayant alors un flasque périphérique simple pouvant se monter comme dans le cas des figures 4A-4B, sans former un tronçon du boîtier 2 externe.

En référence à la figure 6, le boîtier 2 peut contenir un élément filtrant 20 présente une forme généralement annulaire autour d'un espace intérieur creux 24, en s'étendant autour de l'axe longitudinal A dans sa position de montage. Un tel élément filtrant pour filtrer les poussières fines présente un média filtrant 25"' plissé qui peut être placé autour d'un tube cylindrique de rigidification ajouré. Le média 25" est traversé par un flux d'air qui circule de façon centripète depuis une région annulaire périphérique RP inclue dans la zone intermédiaire Z50 jusque dans l'espace intérieur creux 24 inclus dans la zone propre Z3. Deux flasque axiaux 27, 28, dont un flasque supérieur annulaire 28, permettent de supporter/fixer les extrémités opposées axiales du média filtrant 25". L'un de ces flasques 27, 28 est monté de façon étanche contre la paroi latérale P2, typiquement avec un contact annulaire contre un composant 2b intermédiaire entre le couvercle 2c et le bol 2a formant la zone de piégeage Z4 et logeant les moyens de séparation 5.

Ici l'espace creux 24 où circule l'air purifié F8 débouche par l'ouverture du flasque supérieur 28 vers le reste de la zone propre pour s'évacuer vers la sortie 8 du boîtier 2, de préférence en conservant une direction ascendante longitudinale. Le flasque inférieur 27 peut être fermé, ce qui permet au flux d'air sortant des cheminées 50 d'être déviées d'abord de façon centrifuge avant de rejoindre la région RP puis d'être filtré de façon centripète au travers du média 25".

Dans certains modes de réalisation, le boîtier 2 présente un compartiment interne intermédiaire (ici entre les compartiments C1 C2), au-dessus des cheminées 50, dans lequel sont montés des moyens des déflecteurs 42, 44. La figure 8 montre un exemple d'intégration de moyens déflecteurs 42, 44 entre un élément filtrant 20 placé dans le compartiment supérieur et les moyens de séparation 5, par exemple au niveau d'une jonction avec le couvercle 2c.

Afin d'éviter de projeter de la poussière résiduelle directement sur la face d'entrée 20a de l'élément filtrant 20, il peut être prévu une paroi en forme de parasol servant à guider le flux d'air sortant des cheminées 50 sur la face interne de la paroi latérale P2 du boîtier 2. En variante, une telle paroi de déviation peut consister en un simple disque plat, jouant la fonction d'impacteur. Plus généralement on peut choisir une concavité orientée vers le haut ou vers le bas, ou une forme voûtée similaire à celle de la partie centrale 17 du flasque 16 pour former une paroi de déviation en regard des orifices de sortie des cheminées 50.

En référence à la figure quatre, on peut aussi prévoir un préfiltre, ici sous la forme d'un bloc de mousse M poreuse qui est solidarisé à l'élément filtrant 20. Ce type de préfiltre peut éviter l'utilisation de moyens déflecteurs 42, 44 et/ou peut être utilisé en aval de parois d'impaction et/ou de déflexion.

Dans l'exemple non limitatif de la figure 4B, on prévoit une simple plaque 42 à effet d'impaction, qui s'étend transversalement dans le volume intérieur du boîtier 2, en obligeant le flux d'air sortant des cheminées 50 à emprunter des orifices 43 décalés vers l'extérieur (ou décalé d'une quelconque façon) par rapport à l'orientation - suivant les axes X - des flux d'air issus des cheminées 50. La plaque 42, en regard des cyclones 6, peut forcer le flux d'air à s'écarter rapidement des organes de décélération T et contribuer ainsi à ce que moins de poussière s'accumule sur le haut des cheminée en raison de la poussière résiduelle de l'air tourbillonnant rejeté au niveau des orifices d'organes de décélération T. Ce type de disposition est compatible avec l'utilisation d'un préfiltre tel que montré sur la figure 4A. Bien entendu, la plaque 42 peut inclure des premiers moyens déflecteurs au niveau des orifices 43 décalés, éventuellement complétés par des seconds moyens déflecteurs 44 qui sont par exemple espacés/ axialement espacés de la plaque 42.

En référence à la figure 8, on prévoit une pièce transversale qui intègre les moyens déflecteurs, ici sous la forme de portions concaves 44. La fonction de cette pièce est d'amener une rotation sur le fluide, afin d'éjecter la poussière restante (de façon radiale). Une structure à cône central inversé peut être avantageuse pour compléter la pièce transversale et former une dernière paroi de déviation, juste avant la face d'entrée 20a pour l'accès au média filtrant 25. Une telle structure à cône central inversé permet d'accélérer la vitesse de rotation du fluide ce qui améliore l'efficacité de séparation dans la durée.

Dans ce cas, on peut utiliser seulement une pièce pour former les parois de déviation montrées sur la figure 8 et/ou les portions 42, 43 peuvent être supprimées. En l'absence de paroi 42, il est préférable de positionner les cheminées 50 comme les orifices 43 sur la figure 8 pour co-agir avec les parois concaves de déflexion 44 constituant les moyens déflecteurs. Ici, il y a autant de parois concaves, éventuellement constituées chacune en demi ou quart de coque, que de cheminées 50.

En fonctionnement, comme illustré sur les figures 1 et 3B le dispositif 1 fonctionne en mode aspiration (grâce à une turbine 33, 34 montée en aval, intégrée ou non au boîtier 2) et le flux d'air F chargé rentre dans le boîtier 2 par l'entrée E inférieure. Les cyclones 6 séparent les particules solides PS présentes dans le flux F qui sont isolées dans la zone de piégeage. En cas de présence de liquide L, celuici est aussi aspiré de façon ascendante pour rejoindre directement l'entrée d'alimentation 10 (située à l'aplomb de l'entrée E) et être soumis à la force centrifuge dès la sortie des branches 12 du collecteur d'admission 11, au niveau du débouché radial 12b. Cette partie de la séparation se fait exclusivement dans le compartiment inférieur C1.

Les poussières résiduelles, de plus petite tailles et les particules fines sont ensuite acheminées avec l'air dans le compartiment supérieur C2, via les cheminées 50 et peuvent être déviées avant l'étage de filtration intégré intérieurement dans le boîtier 2. Un insert peut être prévu, par exemple pour préfiltrer ou éviter une trajectoire directe entre l'organe de décélération T et le média filtrant 25, 25'. Plus généralement, quel que soit la structure pour intégrer l'étage de filtration dans le compartiment supérieur C2, on forme ainsi une unité de séparation d'air efficace au cours du temps, bien adaptée pour le traitement de poussières de frein. L'insert peut être un déflecteur, une mousse ou un préfiltre similaire ou une grille perforée.

Un des avantages du dispositif de séparation 1 est de permettre une efficacité de séparation et de rassembler, dans un boîtier relativement compact, plusieurs étages de séparation dont une séparation principale par de nombreux cyclones 6. En pratique, plus de 80% des particules de freins solides (et poussières) peuvent être séparées par le groupement à cyclones 6. L'utilisation d'un ou plusieurs éléments filtrants, en aval d'un tel groupement à cyclones, complète avantageusement la séparation en retenant les particules plus fines.

Il est permis, par une unité de séparation combinant des cyclones 6 et du média filtrant 25, typiquement au sein d'un même boîtier 2, de diminuer les particules fines du trafic routier, sachant qu'on considère (au moins pour ce qui concerne l'Occident) que les émissions de particules fines du trafic routier proviennent pour 20 % des freins.

Il doit être évident pour les personnes versées dans l'art que la présente invention permet des modes de réalisation sous de nombreuses autres formes spécifiques sans l'éloigner du domaine d'application de l'invention comme revendiqué.

Par exemple, bien que le boîtier 2 a été décrit comme généralement de forme cylindrique pour sa paroi latérale P2, d'autres géométrie peuvent être utilisée. Egalement, le couvercle 2c peut être de forme différente et/ou intégrer certaines fonctions non illustrées, par exemple en supportant l'élément filtrant 20 à l'aide de pattes de fixation ou organe d'ancrage similaire avec une ossature de l'élément filtrant 20 (comme le flasque 28 ou autre partie adaptée). On comprend que le dispositif 1 permet une grande versatilité dans la façon d'intégrer l'étage de filtration, la taille du compartiment supérieur C2 pouvant alors varier selon les besoins.

## Revendications

1. Dispositif (1) de séparation de particules et poussières de freinage, pour collecter des particules et poussières produites par un ou des patins d'un ensemble de frein (7), le dispositif (1) comprenant :
- un boîtier (2) disposant d'une entrée (E) pour l'admission d'un flux d'air (F) chargé en particules et poussières de freinage et une sortie (8 ; 36) pour l'évacuation d'air purifié (F8), le boîtier (2) comprenant une paroi latérale (P2) tubulaire s'étendant autour d'un axe longitudinal (A) et une paroi de fond (3),
- des moyens de séparation (5), espacés axialement par rapport à la paroi de fond (3) pour retenir au moins une partie des particules et des poussières de freinage admises via l'entrée (E),
- une zone de piégeage (Z4) des particules et poussières séparées par les moyens de séparation (5), et
- une zone d'aval (Z2) délimitée par les moyens de séparation (5) dans le boîtier (2), la zone d'aval (Z2) étant située, au moins en partie, axialement à l'opposé de l'entrée (E) et/ou de la zone de piégeage (Z4),
**caractérisé en ce que** les moyens de séparation (5) comprennent un groupement de cyclones (6), logé dans le boîtier (2) et permettant de séparer des particules et des poussières, ainsi que des gouttelettes d'eau présentes dans le flux d'air (F) admis via l'entrée (E), chacun des cyclones (6) comprenant un corps (15) effilé vers le bas ayant une extrémité inférieure (15c) débouchant via un orifice (06) de décharge gravitaire dans ladite zone de piégeage (Z4), ledit corps (15) délimitant une chambre de séparation (18), le groupement comprenant :
- une entrée d'alimentation axiale (10) commune aux cyclones (6) du groupement, pourvue d'un raccord (10a) pour un conduit axial (4) permettant au flux d'air admis par l'entrée (E) de circuler jusqu'au groupement de cyclones (6) par le dessous ;
- une pluralité de cheminées (50) évacuant chacune de l'air d'une chambre de séparation (18) et débouchant dans la zone d'aval (Z2) à l'intérieur du boîtier (2) ; et
- un collecteur d'admission (11) présentant une pluralité de branches (12) tubulaires pour répartir ledit flux d'air (F) chargé en particules et poussières, en s'étendant entre l'entrée d'alimentation axiale (10) et chaque chambre de séparation (18) respective des cyclones (6), chacune des branches (12) tubulaires débouchant radialement dans une chambre de séparation (18) correspondante, tous les corps (15) des cyclones (6) étant placés radialement à distance de l'axe longitudinal (A), entre l'axe longitudinal (A) et la paroi latérale (P2) ;
**et en ce que** le groupement de cyclones (6) forme une barrière transversale reliée de façon étanche au conduit axial (4), la barrière transversale (BT) et le conduit axial (4) empêchant une remontée vers la zone d'aval (Z2) d'un mélange hétérogène liquide-solide pendant le fonctionnement du dispositif (1)

2. Dispositif (1) de séparation selon la revendication 1, dans lequel les cyclones (6) dudit groupement comprennent au moins six cyclones, l'entrée (E) du dispositif (1) étant plus basse que le niveau de n'importe lequel des orifices (06) de décharge gravitaire, et de préférence plus basse qu'un point bas de la zone de piégeage (Z4),
et/ou dans lequel les cyclones (6) sont répartis de façon annulaire autour de l'entrée d'alimentation axiale (10) commune aux cyclones (6), chacune des branches (12) tubulaires débouchant radialement dans une chambre de séparation (18) correspondante, la zone de piégeage (Z4) dans laquelle tous les orifice (06) de décharge gravitaire débouchent étant délimitée par la paroi de fond (3) du boîtier (2), la zone de piégeage (Z4) s'étendant autour du conduit axial (4) de façon annulaire avec une extension radiale allant du conduit axial (4) jusqu'à la paroi latérale (P2).

3. Dispositif (1) de séparation selon la revendication 1 ou 2, dans lequel le groupement de cyclones (6) forme une unité structurelle multi-cyclone insérable d'un seul tenant dans le volume intérieur du boîtier (2), et qui est de préférence emboîtable de façon étanche et centrée sur le conduit axial (4) formé en tant que projection axiale interne dans un bol (2a) appartenant au boîtier (2).

4. Dispositif (1) de séparation selon la revendication 1, 2 ou 3, dans lequel les moyens (5) de séparation sont réalisés en deux ou trois pièces moulées chacune en une matière plastique.

5. Dispositif (1) de séparation selon l'une quelconque des revendications précédentes, dans lequel chaque corps (15) est connecté sélectivement à une branche (12) du collecteur d'admission (11) en étant intégralement formé avec elle, en une matière plastique moulée.

6. Dispositif (1) de séparation selon l'une quelconque des revendications précédentes, dans lequel le groupement de cyclones (6) comprend un flasque supérieur (16) transversal ayant une portion annulaire de fixation dans le boîtier (2), le flasque supérieur (16) formant des parties radiales supérieures au sommet de chacun des corps (15) des cyclones (6),
et dans lequel chacune des cheminées (50) s'étend en saillie axiale de part et d'autre du flasque supérieur (16).

7. Dispositif (1) de séparation selon la revendication 6, dans lequel chacune des cheminées (50) présente :
- un insert tubulaire (50a) en saillie axiale vers le bas par rapport au flasque supérieur (16), dont au moins une portion est en regard d'un débouché radial (12b) d'une des branches (12) du collecteur d'admission (11), en s'étendant dans une chambre de séparation (18) ; et
- un organe de décélération (T) ayant une forme évasée en direction de la sortie (8).

8. Unité de séparation d'air comprenant le dispositif (1) de séparation de particules et poussières de freinage selon l'une quelconque des revendications précédentes, et comprenant en outre :
- au moins un élément filtrant (20) pourvu d'un média filtrant (25 ; 25' ; 25") qui s'étend dans la zone d'aval (Z2) à l'intérieur du boîtier (2) en délimitant :
- une zone intermédiaire (Z50) de circulation d'air purifié sortant des cyclones (6), en communication avec les cheminées (50) ; et
- une zone propre (Z3) en communication avec la sortie (8 ; 36).

9. Unité de séparation d'air selon la revendication 8, dans laquelle l'élément filtrant (20) est traversé par un flux d'air qui circule parallèlement à l'axe longitudinal (A) au travers du média filtrant (25).

10. Unité de séparation d'air selon la revendication 8, dans laquelle l'élément filtrant (20) présente une forme annulaire autour d'un espace intérieur creux (24) est traversé par un flux d'air qui circule de façon centripète depuis une région annulaire périphérique inclue dans la zone intermédiaire (Z50) jusque dans l'espace intérieur creux (24) inclus dans la zone propre (Z3).

11. Unité de séparation d'air selon l'une quelconque des revendications 8 à 10, dans laquelle le boîtier **(2)** contient dans la zone propre (Z3) un rotor de turbine (33) pour permettre d'aspirer le flux d'air (F) admis via l'entrée (E) du boîtier (2).

12. Unité de séparation d'air selon l'une quelconque des revendications 8 à 11, comprenant des moyens déflecteurs formés entre les cheminées (50) et une face d'entrée (20a) transversale d'accès au média filtrant (25), les moyens déflecteur (42, 44) comprenant :
- des trous de passage (43) qui sont décalés radialement par rapport aux cheminées (50),
- et/ou des portions concaves de déflexion (44) avec une surface concave de mise en rotation d'un flux d'air sortant d'une cheminée, les portions concaves de déflexion (44) bordant ou faisant face à chaque cheminée (50) des cyclones (6).

13. Ensemble de frein (7) non polluant comprenant :
- l'unité de séparation d'air selon l'une quelconque des revendications 8 à 12,
- un support d'étrier (71),
- un disque rotor (D) tournant autour d'un axe (Y),
- au moins deux patins mobiles (72a, 72b) destinés à venir en appui sur le disque rotor (D) pour le freiner sous une force de serrage fournie par un étrier, les patins (72a, 72b) comprenant du matériau de friction susceptible de relâcher des particules résultant de l'abrasion,
- un dispositif collecteur (100) agencé au moins en partie à proximité du support d'étrier (71), le dispositif collecteur (100) comprenant :
- au moins une entrée, et
- un élément de liaison (13), raccordé à une sortie du dispositif collecteur (100) et en communication avec l'entrée (E) du boîtier (2) de l'unité de séparation d'air.

14. Ensemble de frein selon la revendication 13, dans lequel le dispositif collecteur (100) présente des moyens d'aspiration agencés au moins en partie à proximité du support d'étrier (71), de façon que chaque entrée du dispositif collecteur (100) soit définie par une zone d'aspiration formée au voisinage de chaque patin (72a, 72b) et délimitée par un déflecteur.

15. Utilisation du dispositif de séparation (1) selon l'une quelconque des revendications 1 à 7 dans un véhicule ou engin roulant générant des particules et des poussières de freinage, **caractérisée en ce que** l'entrée (E) formée par le boîtier (2) définit une canule (C3) sur laquelle est fixé un élément de liaison (13), de préférence un tuyau souple, pour la liaison à un dispositif (100) collecteur de poussières de freinage, le boîtier (2) étant attaché par des moyens de fixation (92) à une jambe (91) d'un amortisseur de suspension (90).

16. Utilisation du dispositif de **séparation** (1) selon l'une quelconque des revendications 1 à 7 dans un véhicule ou engin roulant générant des particules et des poussières de freinage, **caractérisée en ce que** la zone de piégeage (Z4) est formée par un étage inférieur du dispositif de séparation (1) et sert à conserver des particules et des poussières de freinage ainsi que des gouttelettes de liquide séparées par le groupement de cyclones (6) autour d'un conduit axial (4) acheminant de façon ascendante un flux d'air brut directement dans le collecteur d'admission (11).

## Patentansprüche

1. Vorrichtung (1) zum Trennen von Bremsstaub und -partikeln, zum Sammeln von Partikeln und Staub, die von einem oder mehreren Bremsklötzen einer Bremsanordnung (7) erzeugt werden, wobei die Vorrichtung (1) umfasst:
- ein Gehäuse (2), das über einen Einlass (E) für den Einlass eines mit Partikeln und Bremsstaub beladenen Luftstroms (F) und einen Auslass (8; 36) für den Auslass von gereinigter Luft (F8) verfügt, wobei das Gehäuse (2) eine rohrförmige Seitenwand (P2), die sich um eine Längsachse (A) erstreckt, und eine Bodenwand (3) umfasst,
- Trennmittel (5), die in Bezug auf die Bodenwand (3) axial beabstandet sind, um wenigstens einen Teil der Partikel und des Bremsstaubs zurückzuhalten, die über den Einlass (E) eingelassen werden,
- eine Fangzone (Z4) für die von den Trennmitteln (5) getrennten Partikel und Stäube, und
- eine stromabwärts gelegene Zone (Z2), die von den Trennmitteln (5) im Gehäuse (2) begrenzt wird, wobei die stromabwärts gelegene Zone (Z2) wenigstens teilweise axial gegenüber dem Einlass (E) und/oder der Fangzone (Z4) liegt,
**dadurch gekennzeichnet, dass** die Trennmittel (5) eine Gruppe von Zyklonen (6) umfassen, die in dem Gehäuse (2) aufgenommen sind und es ermöglichen, Partikel und Staub sowie Wassertröpfchen, die sich in dem über den Einlass (E) eingelassenen Luftstrom (F) befinden, abzutrennen, wobei jeder der Zyklone (6) einen sich nach unten verjüngenden Körper (15) umfasst, mit einem inneren Ende (15c), das über eine Schwerkraftentlastungsöffnung (06) in der Fangzone (Z4) mündet, wobei der Körper (15) eine Trennkammer (18) begrenzt, wobei die Anordnung umfasst:
- einen axialen Zufuhreinlass (10), der den Zyklonen (6) der Gruppe gemeinsam ist und mit einem Anschluss (10a) für einen axialen Kanal (4) versehen ist, der es dem durch den Einlass (E) eingelassenen Luftstrom ermöglicht, bis zur Gruppe von Zyklonen (6) von unten zu strömen;
- eine Vielzahl von Kanälen (50), die jeweils Luft aus einer Trennkammer (18) ableiten und in der stromabwärts gelegenen Zone (Z2) im Inneren des Gehäuses (2) münden; und
- einen Einlasskrümmer (11) mit einer Vielzahl von rohrförmigen Schenkel (12) zum Verteilen des mit Partikeln und Staub beladenen Luftstroms (F), der sich zwischen dem axialen Zufuhreinlass (10) und jeder entsprechenden Trennkammer (18) der Zyklone (6) erstreckt, wobei jeder der rohrförmigen Schenkel (12) radial in eine entsprechende Trennkammer (18) mündet, wobei alle Körper (15) der Zyklone (6) radial in einem Abstand von der Längsachse (A) zwischen der Längsachse (A) und der Seitenwand (P2) angeordnet sind;
**und dadurch, dass** die Gruppe von Zyklonen (6) eine Querbarriere bildet, die dicht mit der axialen Leitung (4) verbunden ist, wobei die Querbarriere (BT) und die axiale Leitung (4) ein Aufsteigen eines heterogenen Flüssigkeit-Feststoff-Gemisches in der stromabwärts gelegenen Zone (Z2) während des Betriebs der Vorrichtung (1) verhindern.

2. Trennvorrichtung (1) nach Anspruch 1, wobei die Zyklone (6) der genannten Gruppe wenigstens sechs Zyklone umfassen, wobei der Einlass (E) der Vorrichtung (1) tiefer liegt als das Niveau einer der Schwerkraftentlastungsöffnungen (06) und vorzugsweise tiefer als ein Tiefpunkt der Fangzone (Z4),
und/oder wobei die Zyklone (6) ringförmig um den den Zyklonen (6) gemeinsamen axialen Zufuhreinlass (10) verteilt sind, wobei jeder der rohrförmigen Schenkel (12) radial in eine entsprechende Trennkammer (18) mündet, wobei die Fangzone (Z4), in die alle Schwerkraftentlastungsöffnungen (06) münden, durch die Bodenwand (3) des Gehäuses (2) begrenzt ist, wobei sich die Fangzone (Z4) ringförmig um den axialen Kanal (4) mit einer radialen Ausdehnung von dem axialen Kanal (4) zu der Seitenwand (P2) erstreckt.

3. Trennvorrichtung (1) nach Anspruch 1 oder 2, wobei die Gruppe von Zyklonen (6) eine Multizyklon-Struktureinheit bildet, die integral in das Innenvolumen des Gehäuses (2) einsetzbar ist, und die vorzugsweise dicht und zentriert auf den axialen Kanal (4) aufsteckbar ist, der als innere axiale Projektion in einer zum Gehäuse (2) gehörenden Schale (2a) ausgebildet ist.

4. Trennvorrichtung (1) nach Anspruch 1, 2 oder 3, wobei die Trennmittel (5) aus zwei oder drei Teilen bestehen, die jeweils aus einem Kunststoffmaterial geformt sind.

5. Trennvorrichtung (1) nach einem der vorhergehenden Ansprüche, wobei jeder Körper (15) selektiv mit einem Schenkel (12) des Einlasskrümmers (11) verbunden ist, indem er integral mit diesem aus einem geformten Kunststoffmaterial geformt ist.

6. Trennvorrichtung (1) nach einem der vorhergehenden Ansprüche, wobei die Anordnung der Zyklone (6) einen quer verlaufenden oberen Flansch (16) mit einem ringförmigen Abschnitt zur Befestigung in dem Gehäuse (2) umfasst, wobei der obere Flansch (16) obere radiale Abschnitte an der Oberseite jedes der Körper (15) der Zyklone (6) bildet,
und wobei jeder der Kanäle (50) sich axial vorspringend auf beiden Seiten des oberen Flansches (16) erstreckt.

7. Trennvorrichtung (1) nach Anspruch 6, wobei jeder der Kanäle (50) aufweist:
- einen rohrförmigen Einsatz (50a), der in Bezug auf den oberen Flansch (16) axial nach unten vorsteht und von dem wenigstens ein Abschnitt einer radialen Öffnung (12b) eines der Schenkel (12) des Einlasskrümmers (11) gegenüberliegt, wobei er sich in eine Trennkammer (18) erstreckt; und
- ein Abscheideelement (T) mit einer sich in Richtung des Auslasses (8) verjüngenden Form.

8. Luftabtrenneinheit, umfassend die Vorrichtung (1) zum Trennen von Partikeln und Bremsstaub nach einem der vorhergehenden Ansprüche, und ferner umfassend:
- wenigstens ein Filterelement (20), das mit einem Filtermedium (25; 25'; 25") versehen ist, das sich in der stromabwärts gelegene Zone (Z2) im Inneren des Gehäuses (2) erstreckt, wodurch es begrenzt wird:
- eine Zwischenzone (Z50) für die Zirkulation von gereinigter Luft, die aus den Zyklonen (6) austritt und mit den Kanälen (50) in Verbindung steht; und
- eine Reinzone (Z3), die mit dem Auslass (8; 36) in Verbindung steht.

9. Luftabtrenneinheit nach Anspruch 8, wobei das Filterelement (20) von einem Luftstrom durchquert wird, der parallel zur Längsachse (A) durch das Filtermedium (25) strömt.

10. Luftabtrenneinheit nach Anspruch 8, wobei das Filterelement (20) eine Ringform um einen hohlen Innenraum (24) aufweist und von einem Luftstrom durchquert wird, der zentripetal von einem peripheren Ringbereich, der in der Zwischenzone (Z50) enthalten ist, in den hohlen Innenraum (24), der in der Reinzone (Z3) enthalten ist, strömt.

11. Luftabtrenneinheit nach einem der Ansprüche 8 bis 10, wobei das Gehäuse (2) in der Reinzone (Z3) einen Turbinenrotor (33) enthält, um den Luftstrom (F), der durch den Einlass (E) des Gehäuses (2) eingelassen wird, ansaugen zu können.

12. Luftabtrenneinheit nach einem der Ansprüche 8 bis 11, umfassend zwischen den Kanälen (50) und einer quer verlaufenden Eintrittsfläche (20a) zum Zugang zum Filtermedium (25) ausgebildete Deflektormittel, wobei die Deflektormittel (42, 44) umfassen:
- Durchgangslöcher (43), die in Bezug auf die Kanäle (50) radial versetzt sind,
- und/oder konkave Ablenkungsabschnitte (44) mit einer konkaven Oberfläche zum Drehen eines Luftstroms, der aus einem Kanal austritt, wobei die konkaven Ablenkungsabschnitte (44) an jeden Kanal (50) der Zyklone (6) angrenzen oder diesem zugewandt sind.

13. Umweltfreundliche Bremsanordnung (7), die Folgendes umfasst:
- die Luftabtrenneinheit nach einem der Ansprüche 8 bis 12,
- einem Bremssattelträger (71),
- eine Rotorscheibe (D), die sich um eine Achse (Y) dreht,
- wenigstens zwei bewegliche Klötze (72a, 72b), die dazu bestimmt sind, an der Rotorscheibe (D) anzuliegen, um sie unter einer von einem Bügel gelieferten Klemmkraft zu bremsen, wobei die Klötze (72a, 72b) Reibungsmaterial umfassen, das durch Abrieb entstandene Partikel freisetzen kann,
- eine Sammelvorrichtung (100), die wenigstens teilweise in der Nähe des Bremssattelträger (71) angeordnet ist, wobei die Sammelvorrichtung (100) Folgendes umfasst:
- wenigstens einen Einlass und
- ein Verbindungselement (13), das mit einem Ausgang der Sammelvorrichtung (100) verbunden ist und mit dem Einlass (E) des Gehäuses (2) der Luftzerlegungseinheit in Verbindung steht.

14. Bremsanordnung nach Anspruch 13, wobei die Sammelvorrichtung (100) Ansaugmittel aufweist, die wenigstens teilweise in der Nähe des Bremssattelträgers (71) angeordnet sind, so dass jeder Einlass der Sammelvorrichtung (100) durch eine Ansaugzone definiert ist, die in der Nähe jedes Bremsklotzes (72a, 72b) gebildet und durch einen Abweiser begrenzt wird.

15. Verwendung der Trennvorrichtung (1) nach einem der Ansprüche 1 bis 7 in einem Fahrzeug oder einer rollenden Maschine, die Partikel und Bremsstaub erzeugt, **dadurch gekennzeichnet, dass** der durch das Gehäuse (2) gebildete Einlass (E) eine Kanüle (C3) definiert, an der ein Verbindungselement (13) befestigt ist, wobei das Gehäuse (2) mit Hilfe von Befestigungsmitteln (92) an einem Bein (91) eines Stoßdämpfers (90) befestigt wird.

16. Verwendung der Trennvorrichtung (1) nach einem der Ansprüche 1 bis 7 in einem Fahrzeug oder einer rollenden Maschine, die Partikel und Bremsstaub erzeugt, **dadurch gekennzeichnet, dass** die Fangzone (Z4) durch eine untere Stufe der Trennvorrichtung (1) gebildet wird und dazu dient, Partikel und Bremsstaub sowie Flüssigkeitströpfchen zu halten, die durch die Zyklonenanordnung (6) um eine axiale Leitung (4) herum abgeschieden werden, die einen Rohluftstrom direkt in den Einlasskrümmer (11) aufwärts leitet.

## Claims

1. A device (1) for separating brake dust and particles, for collecting dust and particles produced by one or more pads of a brake assembly (7), the device (1) comprising:
- a casing (2) having an inlet (E) for admitting a flow (F) of air laden with brake dust and particles, and an outlet (8; 36) for discharging purified air (F8), the casing (2) comprising a tubular lateral wall (P2) extending around a longitudinal axis (A) and an end wall (3),
- separation means (5), spaced axially away from the end wall (3) to retain at least some of the brake dust and particles admitted via the inlet (E),
- a trapping zone (Z4) for trapping the dust and particles separated by the separation means (5), and
- a downstream zone (Z2) delimited by the separation means (5) in the casing (2), the downstream zone (Z2) being situated, at least in part, axially at the opposite end from the inlet (E) and/or from the trapping zone (Z4),
**characterized in that** the separation means (5) comprise a group of cyclones (6), housed in the casing (2) and able to separate dust and particles, as well as water droplets present in the flow (F) of air admitted via the inlet (E), each of the cyclones (6) comprising a body (15) that tapers in downward direction, having a lower end (15c) opening via a gravity discharge orifice (06) into said trapping zone (Z4), said body (15) delimiting a separation chamber (18), the group comprising:
- an axial supply inlet (10) common to the cyclones (6) of the group, and provided with a connector (10a) for an axial duct (4) allowing the flow of air admitted via the inlet (E) to circulate as far as the group of cyclones (6) from beneath;
- a plurality of exhaust stacks (50) each discharging air from a separation chamber (18) and opening into the downstream zone (Z2) inside the casing (2); and
- an intake manifold (11) having a plurality of tubular branches (12) to distribute said flow (F) of air laden with dust and particles, extending between the axial supply inlet (10) and each respective separation chamber (18) of the cyclones (6), each of the tubular branches (12) opening radially into a corresponding separation chamber (18), all the bodies (15) of the cyclones (6) being placed radially distant from the longitudinal axis (A), between the longitudinal axis (A) and the lateral wall (P2);
and **in that** the group of cyclones (6) forms a transverse barrier connected in a fluidtight manner to the axial duct (4), the transverse barrier (BT) and the axial duct (4) preventing a heterogeneous liquid-solid mixture from traveling back up toward the downstream zone (Z2) during operation of the device (1).

2. The separation device (1) as claimed in claim 1, wherein the cyclones (6) of said group comprise at least six cyclones, the inlet (E) of the device (1) being lower than the level of any one of the gravity discharge orifices (06), and preferably lower than a low point of the trapping zone (Z4),
and/or wherein the cyclones (6) are distributed in an annular configuration around the axial supply inlet (10) common to the cyclones (6), each of the tubular branches (12) opening radially into a corresponding separation chamber (18), the trapping zone (Z4) into which all of the gravity discharge orifices (06) open being delimited by the end wall (3) of the casing (2), the trapping zone (Z4) extending around the axial duct (4) in an annular configuration with a radial extension extending from the axial duct (4) as far as the lateral wall (P2).

3. The separation device (1) as claimed in claim 1 or 2, wherein the group of cyclones (6) forms a multi-cyclone structural unit that can be inserted as a single piece in the interior volume of the casing (2) and which can preferably be fitted in a fluidtight and centered manner over the axial duct (4) formed as an internal axial projection in a bowl (2a) belonging to the casing (2).

4. The separation device (1) as claimed in claim 1, 2 or 3, wherein the separation means (5) are produced as two parts or three parts each molded in a plastics material.

5. The separation device (1) as claimed in any one of the preceding claims, wherein each body (15) is selectively connected to a branch (12) of the intake manifold (11), being formed as an integral part thereof, in a molded plastics material.

6. The separation device (1) as claimed in any one of the preceding claims, wherein the group of cyclones (6) comprises a transverse upper flange (16) having an annular fixing portion for fixing in the casing (2), the upper flange (16) forming upper radial parts at the top of each of the bodies (15) of the cyclones (6), and wherein each of the exhaust stacks (50) extends as an axial projection on each side of the upper flange (16).

7. The separation device (1) as claimed in claim 6, wherein each of the exhaust stacks (50) has:
- a tubular insert (50a) projecting axially downward with respect to the upper flange (16), of which at least a portion faces a radial mouth (12b) of one of the branches (12) of the intake manifold (11), extending into a separation chamber (18); and
- a deceleration member (T) having a flared shape that widens in the direction of the outlet (8).

8. An air separation unit comprising the device (1) for separating brake dust and particles (1) as claimed in any one of the preceding claims, and further comprising:
- at least one filtering element (20) provided with a filter media (25; 25'; 25") which extends in the downstream zone (Z2) inside the casing (2), delimiting:
- an intermediate zone (Z50) for the circulation of purified air leaving the cyclones (6), in communication with the exhaust stacks (50); and
- a clean zone (Z3) in communication with the outlet (8; 36).

9. The air separation unit as claimed in claim 8, wherein the filtering element (20) has passing through it a flow of air which circulates parallel to the longitudinal axis (A) through the filter media (25).

10. The air separation unit as claimed in claim 8, wherein the filtering element (20) has the shape of an annulus around a hollow interior space (24) through which there passes a flow of air which circulates centripetally from a peripheral annular region included in the intermediate zone (Z50) as far as the hollow interior space (24) included within the clean zone (Z3).

11. The air separation unit as claimed in any one of claims 8 to 10, wherein the casing (2) contains, in the clean zone (Z3), a turbine rotor (33) able to aspirate the flow (F) of air admitted via the inlet (E) of the casing (2).

12. The air separation unit as claimed in any one of claims 8 to 11, comprising deflector means formed between the exhaust stacks (50) and a transverse inlet face (20a) for access to the filter media (25), the deflector means (42, 44) comprising:
- passage holes (43) which are offset radially with respect to the exhaust stacks (50),
- and/or concave deflection portions (44) having a concave surface for causing the flow of air leaving an exhaust stack to rotate, the concave deflection portions (44) bordering or facing each exhaust stack (50) of the cyclones (6).

13. A non-polluting brake assembly (7) comprising:
- the air separation unit as claimed in any one of claims 8 to 12,
- a caliper support (71),
- a rotor disk (D) rotating about an axis (Y),
- at least two mobile pads (72a, 72b) intended to come to press against the rotor disk (D) in order to brake same under a brake-application force supplied by a caliper, the pads (72a, 72b) comprising friction material liable to release particles as a result of abrasion,
- a collector device (100) arranged at least in part in the vicinity of the caliper support (71), the collector device (100) comprising:
- at least one inlet, and
- a connecting element (13) connected to an outlet of the collector device (100) and in communication with the inlet (E) of the casing (2) of the air separation unit.

14. The brake assembly as claimed in claim 13, wherein the collector device (100) has aspiration means arranged at least in part in the vicinity of the caliper support (71), so that each inlet of the collector device (100) is defined by an aspiration zone formed in the vicinity of each pad (72a, 72b) and delimited by a deflector.

15. The use of the separation device (1) as claimed in any one of claims 1 to 7 in a vehicle or mobile plant that generates brake dust and particles, **characterized in that** the inlet (E) formed by the casing (2) defines a cannula (C3) to which a connecting element (13), preferably a flexible hose, is fixed, for the purposes of connection to a brake dust collector device (100), the casing (2) being attached by fixing means (92) to a strut (91) of a suspension damper (90).

16. The use of the separation device (1) as claimed in any one of claims 1 to 7 in a vehicle or mobile plant that generates brake dust and particles, **characterized in that** the trapping zone (Z4) is formed by a lower stage of the separation device (1) and serves to hold the brake dust and particles as well as liquid droplets which have been separated by the group of cyclones (6) around an axial duct (4) carrying a raw air flow upward directly into the intake manifold (11).
